# EUROPEAN PATENT APPLICATION

(11) **EP 4 661 161 A1**
(43) Date of publication of application: **10.12.2025**
(21) Application number: 25173984.3
(22) Date of filing: 02.05.2025
(51) Int. Cl.: H01M 10/613, H01M 10/6557, H01M 10/6567, H01M 50/207, H01M 50/244, H01M 50/258, H01M 50/269

(54) **BATTERY PACK AND POWERED DEVICE**

(30) Priority: 07.06.2024 CN 202410738858; 07.06.2024 CN 202421302440 U; 07.06.2024 CN 202421302431 U; 16.08.2024 WO PCT/CN2024/112598
(71) Applicant: Eve Energy Co., Ltd., Huizhou, Guangdong 516006 (CN)
(72) Inventor: Liu, Xiangsheng, Guangdong, 516006 (CN); Qiu, Wencong, Guangdong, 516006 (CN); Liu, Shunmin, Guangdong, 516006 (CN)
(74) Representative: Grünecker Patent- und Rechtsanwälte PartG mbB

(57) **Abstract**

Provided are a battery pack and a powered device. The battery pack includes a box body (100), battery modules (200) and a pressure relief system (400). The multiple battery modules (200) are stacked within the box body (100) in a height direction of the box body (100). The battery module (200) includes a frame (2) and a cell group (1) accommodated within the frame (2). Each of all frames (2) is provided with a sub-channel (220), and sub-channels (220) of all frames (2) communicate with one another to form a module pressure relief channel (221), and ejecta generated during explosion of an explosion-proof valve of the cell group (1) is capable of flowing into the module pressure relief channel (221). The pressure relief system (400) is capable of communicating the module pressure relief channel (221) with an exterior of the box body (100).

## Description

### TECHNICAL FIELD

The present application relates to the technical field of batteries, and in particular, to a battery pack and a powered device.

### BACKGROUND

With the rise of new energy technologies, electric vehicles have received extensive attention from people. A battery pack, as an important component in an electric vehicle, is configured to provide sufficient electric energy for the electric vehicle. The battery pack includes a box body and a battery module disposed in the box body. The box body is configured to provide accommodation space and anti-collision protection for the battery module, thereby improving the safety of the battery pack.

In the related art, when multiple battery modules disposed in the stacked manner are provided in the battery pack, pressure relief channels between the multiple battery modules need to be communicated via an exhaust pipe. However, the assembly of the exhaust pipe is not only time-consuming and labor-intensive, but also a fixing structure is required for fixing the exhaust pipe. As a result, the assembly of the exhaust pipe and the fixing structure thereof not only reduces the assembly efficiency of the battery pack, but also increases the weight of the battery pack to some extent and reduces the energy density of the battery pack.

### SUMMARY

In a first aspect, an embodiment of the present application provides a battery pack. The battery pack includes a box body, multiple battery modules and a pressure relief system. The multiple battery modules are stacked within the box body in a height direction of the box body, a battery module includes a frame and a cell group accommodated within the frame, each frame is provided with a sub-channel, sub-channels of frames communicate with one another to form a module pressure relief channel, and ejecta generated during explosion of an explosion-proof valve of the cell group is capable of flowing into the module pressure relief channel. The pressure relief system communicates the module pressure relief channel with the exterior of the box body.

In a second aspect, an embodiment of the present application provides a powered device. The powered device includes a device main body and the preceding battery pack. The device main body has a mounting space for accommodating the battery pack.

According to the battery pack provided in the present application, the module pressure relief channel is formed by the sub-channels on the frames of the multiple battery modules disposed in the stacked manner, when the air pressure in the module pressure relief channel is higher than a preset air pressure, part of the ejecta in the module pressure relief channel is discharged out of the box body through the pressure relief system so that it can not only improve the safety of the battery pack but also achieve the lightweight design of the battery pack and increase the energy density of the battery pack.

According to the powered device provided in the present application, the safety of the powered device can be improved by using the above-described battery pack.

### BRIEF DESCRIPTION OF THE DRAWINGS

FIG. 1 is a schematic structural diagram of a battery pack according to an embodiment of the present application;
FIG. 2 is a schematic exploded diagram of a battery pack according to an embodiment of the present application;
FIG. 3 is a schematic sectional view of a battery pack of FIG. 1;
FIG. 4 is a schematic exploded diagram of a battery module of FIG. 2;
FIG. 5 is a partial enlarged view of a battery module of FIG. 3;
FIG. 6 is a partial enlarged view of a battery pack of FIG. 3;
FIG. 7 is a schematic structural diagram of a frame of a battery module according to an embodiment of the present application;
FIG. 8 is a schematic structural diagram of a pressure relief system according to an embodiment of the present application;
FIG. 9 is a schematic structural diagram of two adjacent frames in a connected state according to an embodiment of the present application;
FIG. 10 is a schematic structural diagram of two adjacent frames in a disassembled state according to an embodiment of the present application;
FIG. 11 is a sectional view of two adjacent frames of FIG. 6 at a transition portion located at one end in a first direction; and
FIG. 12 is a sectional view of two adjacent frames of FIG. 6 at a transition portion located at the other end in a first direction.

### List of reference numbers

- 100: box body
- 1000: first interval
- 101: cover shell
- 1011: top wall
- 1012: first surrounding wall surface
- 1013: second surrounding wall surface
- 102: closure plate
- 200: battery module
- 2000: second interval
- 20: cell protective member
- 201: first battery module
- 202: second battery module
- 203: third battery module
- 204: fourth battery module
- 300: module protective member
- 400: pressure relief system
- 401: mounting plate
- 402: communication pipe
- 4021: pipe portion
- 4022: sealing portion
- 40221: first sealing surface
- 40222: second sealing surface
- 403: pressure relief valve
- 404: ventilation valve
- 500: battery management system (BMS)
- 1: cell group
- 2: frame
- 21: frame body
- 22: channel member
- 220: sub-channel
- 221: module pressure relief channel
- 222: pressure relief port
- 23: transition portion
- 231: upper inner transition portion
- 232: upper outer transition portion
- 233: lower inner transition portion
- 234: lower outer transition portion
- 211: first frame
- 212: second frame
- 213: third frame
- 214: fourth frame
- 3: pressure relief support assembly
- 30: cell pressure relief channel
- 31: bottom plate
- 311: aperture
- 32: support member
- 33: insulation bracket
- 331: pressure relief inlet
- 332: notch
- 330: pressure relief outlet
- 4: cover plate
- 5: fire-resistant belt
- 6: liquid cooling system
- 7: integrated busbar
- 8: insulation cover plate
- 9: housing

### DETAILED DESCRIPTION

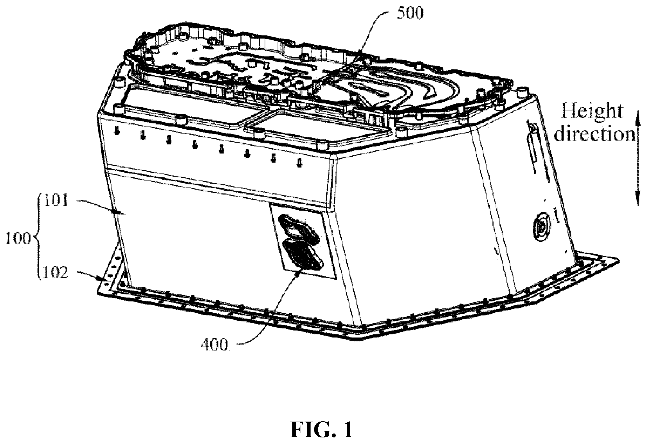

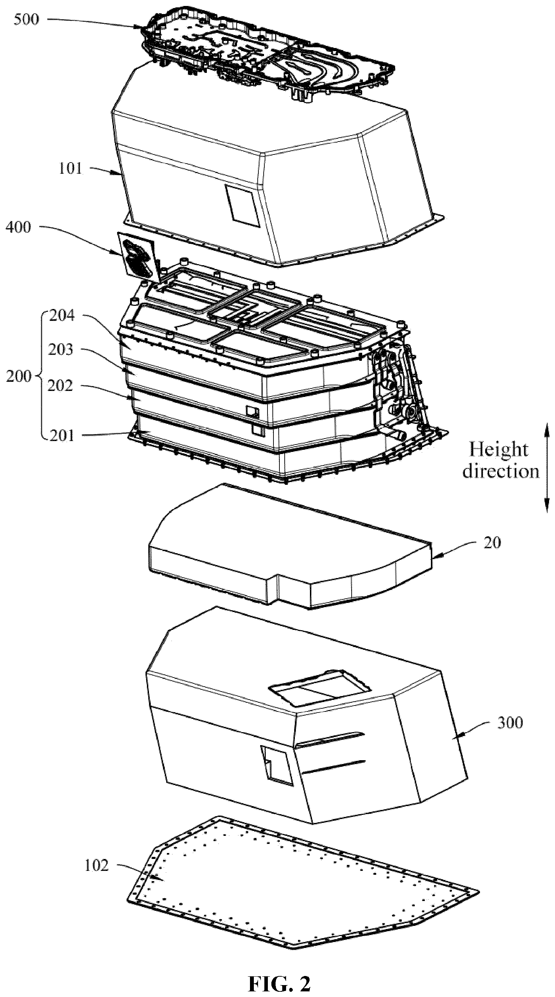

FIG. 1 shows a schematic structural diagram of a battery pack provided in the present application. FIG. 2 shows a schematic exploded diagram of a battery pack provided in the present application. As shown in FIGS. 1 and 2, the battery pack includes a box body 100 and a battery module 200 disposed within the box body 100. The box body 100 is configured to provide anti-collision, waterproof and anti-dust protection for the battery module 200, and the battery module 200 may be charged and discharged to satisfy the user's power requirements.

The present application provides a powered device. The powered device includes a device main body and a battery pack. A mounting space for accommodating the battery pack is provided within the device main body. The powered device may be a new energy vehicle, an energy storage device, or other powered devices, which is not limited herein.

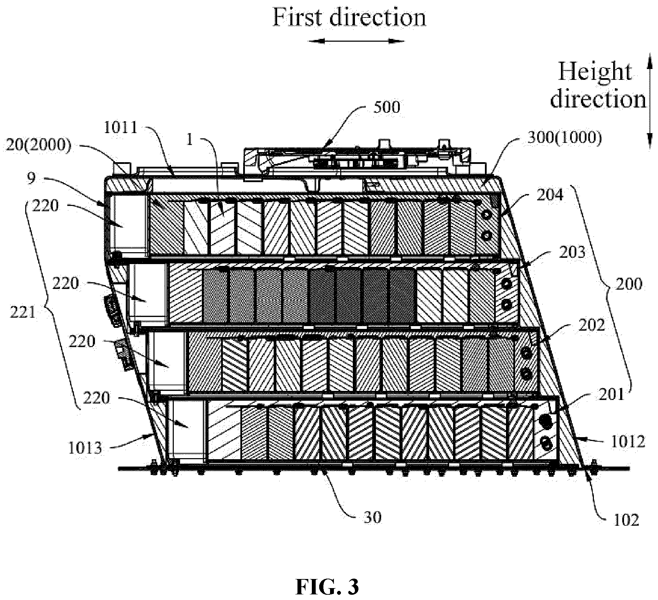

FIG. 3 shows a schematic sectional view of a battery pack of FIG. 1. As shown in FIG. 3, in conjunction with FIG. 2, the box body 100 includes a cover shell 101 and a closure plate 102 fixed to an opening end of the cover shell 101. The cover shell 101 includes a top wall 1011 and a surrounding wall around a peripheral side of the top wall 1011. The surrounding wall includes a first surrounding wall surface 1012 and a second surrounding wall surface 1013 disposed at an interval in a first direction. The first direction is the front-rear direction of a seat. A height direction of the box body 100 is perpendicular to the first direction. The first surrounding wall surface 1012 is disposed opposite to a backrest of the seat of the vehicle, at least part of the second surrounding wall surface 1013 is parallel to the first surrounding wall surface 1012, and both the first surrounding wall surface 1012 and the second surrounding wall surface 1013 are disposed obliquely with respect to the closure plate 102. The multiple battery modules 200 are stacked within the box body 100 in the height direction of the box body 100 and are sequentially arranged in an inclined direction of the first surrounding wall surface 1012 from bottom to top in a staggered manner. In the battery pack, the battery modules 200 are disposed in the stacked manner along the height direction of the box body 100, and through an increase in the height dimension of the battery pack, the energy of the battery pack can be ensured unchanged, thereby reducing the dimension of the horizontal space of the battery pack. The box body 100 has the first surrounding wall surface 1012 and the second surrounding wall surface 1013 that are obliquely disposed to adapt to the inclined space. Exemplarily, in a case where the battery pack in this embodiment is mounted in the rear space of the seat, the multiple battery modules 200 are sequentially arranged in the inclined direction of the first surrounding wall surface 1012 from bottom to top in a staggered manner, to fully utilize the interior space of the box body 100 and improve the energy density of the battery pack.

The above-described profiled battery pack may be mounted at the rear of the seat of the vehicle, to make full use of the height space of the vehicle and prolong the range of travel of the vehicle. The profiled battery pack may be used at the rear of a seat of a B-class car, and may also be used at the rear of seats of a sports car or a vehicle with a small vehicle body, which is not limited herein.

In an embodiment, the closure plate 102 is disposed to be fixedly connected to the chassis of the vehicle, a connection portion extending to the exterior of the box body 100 is disposed at an end of the surrounding wall of the cover shell 101 away from the top wall 1011 thereof, and the connection portion is fixedly connected to the closure plate 102 in a sealing manner. The connection portion is disposed to surround the peripheral side of the surrounding wall, a sealing gasket or sealing glue is disposed between the connection portion and the closure plate 102, and the connection portion is fixedly connected to the closure plate 102 through a bolt.

In an embodiment, an included angle between the first surrounding wall surface 1012 and the closure plate 102 ranges from 60° to 75°, and an included angle between the backrest of the corresponding seat and the seat cushion ranges from 105° to 120° to ensure the seating comfort of the seat. A lower end of the second surrounding wall surface 1013 is disposed parallel to the first surrounding wall surface 1012, and an upper end of the second surrounding wall surface 1013 is adapted to an outer contour of the battery module 200; in this manner, on the one hand, an interval between the second surrounding wall surface 1013 and the battery module 200 can be reduced, thereby facilitating the positioning and fixing of the battery module 200; on the other hand, the appearance dimension of the box body 100 can be reduced, and the mounting space required by the battery pack can be reduced.

In an embodiment, all battery modules 200 have the same shape. All the battery modules 200 are sequentially arranged in a staggered manner in the first direction, with an equal staggered distance. In another embodiment, the shapes of all battery modules 200 in the battery pack may be different or not all the same and may be designed according to the shape of the mounting space, which is not limited herein.

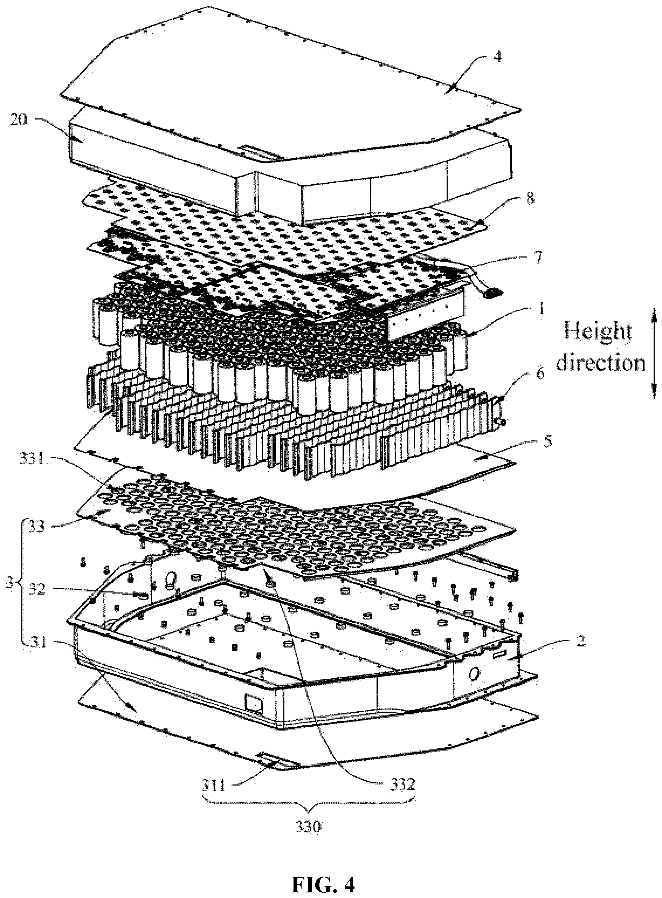

FIG. 4 shows a schematic exploded diagram of a battery module 200 of FIG. 2. As shown in FIG. 4, in conjunction with FIG. 3, the battery pack provided in the present application further includes a module protective member 300 and a cell protective member 20. The multiple battery modules 200 are stacked within the box body 100 in the height direction of the box body 100. A first interval 1000 exists between the battery modules 200 and the inner wall of the box body 100. The module protective member 300 is at least partially accommodated in the first interval 1000. The battery module 200 and the box body 100 are fixed relative to each other through the module protective member 300. The battery module 200 includes a housing 9 and a cell group 1 accommodated in the housing 9. The cell group 1 includes multiple integrated cells. A second interval 2000 exists between the cell group 1 and the inner wall of the housing 9. The cell protective member 20 is at least partially accommodated in the second interval 2000. The cell group 1 and the housing 9 are fixed relative to each other through the cell protective member 20. The cell group 1 is fixed in the housing 9 through the cell protective member 20. The module protective member 300 fixes the multiple battery modules 200 inside the box body 100. The cell protective member 20 and the module protective member 300 can be used for implementing dual protection, that is, not only the overall safety of the battery pack can be improved, but also the height space can be fully used and the energy of the battery pack can be improved.

In an example shown in FIG. 3, four battery modules 200 are provided, and the four battery modules 200 are disposed in the stacked manner along the height direction of the box body 100. In some other embodiments, the number of battery modules 200 may also be any number of two, three, five, six, seven, eight, nine, ten, or the like, which may be designed according to an application scenario of the battery pack, and is not limited herein.

In an embodiment, the module protective member 300 is formed by curing a flowable insulating material filled in the first interval 1000. For example, after the battery module 200 is mounted inside the box body 100, foaming glue or filling glue is filled in the first interval 1000 between the battery module 200 and the box body 100, and the module protective member 300 is formed after the foaming glue or filling glue is cured. The module protective member 300 formed in this manner can not only fix the battery module 200 within the box body 100, but also stably support the battery module 200. In addition, the module protective member 300 is made of the insulating material, the electric leakage probability of the battery pack can be reduced, and the safety of the battery pack can be improved.

In an embodiment, the cell protective member 20 is formed by curing a flowable insulating material filled in the second interval 2000. For example, after the cell group 1 is mounted inside the housing 9, foaming glue or filling glue is filled in the second interval 2000 between the cell group 1 and the housing 9, and the cell protective member 20 is formed after the foaming glue or filling glue is cured. The cell protective member 20 formed in this way can not only fix the cell group 1 within the housing 9, but also stably support the cell group 1. In addition, the cell protective member 20 is made of the insulating material, the electric leakage probability of the battery pack 1 can be reduced, and the safety of the battery module 200 can be improved.

As shown in FIG. 4, in conjunction with FIG. 3, the housing 9 includes the frame 2, the cover plate 4 and a bottom plate 31. The frame 2 is an enclosed shell structure that penetrates vertically in the height direction of the box body 100, the cover plate 4 is fixed to an upper end of the frame 2, and the bottom plate 31 is fixed to a lower end of the frame 2. In a process of assembling the battery module 200, the bottom plate 31 is firstly fixed to the lower end of the frame 2, then the cell group 1 and other structures are mounted, and an insulating material is injected into the enclosed space formed by the frame 2, the bottom plate 31 and the cell group 1, the cell protective member 20 is formed after the insulating material is cured, and finally, the cover plate 4 is fixed to the upper end of the frame 2.

In two adjacent battery modules 200, the bottom plate 31 of the upper housing 9 and the cover plate 4 of the lower housing 9 are of an integrated structure to simplify the connection structure among the multiple battery modules 200, and improve the assembly efficiency among the multiple battery modules 200.

For ease of description, a battery module 200 fixedly connected to the closure plate 102 is defined as the first battery module 201, and the remaining battery modules 200 are numbered sequentially from bottom to top. "In the two adjacent battery modules 200, the bottom plate 31 of the upper housing 9 and the cover plate 4 of the lower housing 9 are of the integrated structure" means that the bottom plate 31 of the second battery module 202 may serve as the cover plate 4 of the first battery module 201; similarly, the bottom plate 31 of the third battery module 203 may serve as the cover plate 4 of the second battery module 202, and the bottom plate 31 of the fourth battery module 204 may serve as the cover plate 4 of the third battery module 203, whereby the multiple battery modules 200 are assembled in this manner, so that not only the assembly efficiency can be improved, but also the overall weight of the battery pack can be reduced. In some other embodiments, the housing 9 of each battery module 200 may also have the frame 2, the cover plate 4 and the bottom plate 31. In this case, after the assembly of the single battery module 200 is completed, the assembly between the battery modules 200 may be performed. When the single battery module 200 is assembled, many workers or automated assembly devices may work simultaneously, whereby the assembly efficiency can also be improved.

In an embodiment, a sealing gasket is provided between the connection portion of the cover shell 101 (referring to FIG. 2) and the closure plate 102. The sealing gasket is configured to ensure a sealed connection between the cover shell 101 and the closure plate 102, thereby avoiding the leakage of the insulating material when the insulating material is poured to cure and form the module protective member 300.

In a process of assembling the battery pack, the first battery module 201 (without the cover plate 4) is fixed on the closure plate 102 firstly, then the second battery module 202 (without the cover plate 4) is fixed on the first battery module 201, the third battery module 203 (without the cover plate 4) is fixed on the second battery module 202, and finally, the fourth battery module 204 (having the cover plate 4) is fixed on the third battery module 203. Two adjacent battery modules 200 are fixedly connected through a fastener so that the connection strength between the battery modules 200 can be improved, the dislocation between the battery modules 200 is avoided, and thus the overall stability and safety of the battery pack are further improved. After all the battery modules 200 are assembled, the cover shell 101 is configured to cover all the battery modules 200, and the cover shell 101 is fixedly connected to the closure plate 102.

In an embodiment, the cell group 1 includes multiple cylindrical cells arranged at intervals within the same plane. To facilitate the mounting of the cylindrical cell, the battery module 200 further includes an insulation bracket 33, and the insulation bracket 33 is located above the bottom plate 31 and is configured to support and mount the cell group 1.

Since the cell group 1 will generate ejecta when thermal runaway occurs, the air pressure inside the housing 9 increases, and to avoid explosion of the cell group 1 under the high-pressure ejecta, it is necessary to remove excessive ejecta within the housing 9 in time. Therefore, the battery module 200 further includes a support member 32, and the support member 32 is located between the bottom plate 31 and the insulation bracket 33 so that a cell pressure relief channel 30 is formed between the bottom plate 31 and the insulation bracket 33. A pressure relief inlet 331 communicating with the cell pressure relief channel 30 is disposed at a position of the insulation bracket 33 corresponding to the explosion-proof valve of the cylindrical cell. The bottom plate 31 has an aperture 311, and the aperture 311 communicates with the cell pressure relief channel 30. When thermal runaway occurs in the cell group 1 or the air pressure inside the housing 9 increases, the ejecta may enter the cell pressure relief channel 30 from the pressure relief inlet 331 of the insulation bracket 33 and then may be discharged from the aperture 311 of the bottom plate 31. The insulation bracket 33 has a pressure relief inlet 331 corresponding to each cylindrical cell, when the ejecta escape from the explosion-proof valve of each cylindrical cell, the ejecta may enter the cell pressure relief channel 30 from the pressure relief inlet 331. The diameter of the pressure relief inlet 331 is less than the diameter of the cylindrical cell, to avoid the cylindrical cell from falling into the cell pressure relief channel 30 through the pressure relief inlet 331.

In an embodiment, multiple support members 32 are provided, and the multiple support members 32 are evenly spaced and arranged between the bottom plate 31 and the insulation bracket 33, to provide an even and stable supporting force for the insulation bracket 33; at the same time, it can be ensured that the cell pressure relief channel 30 has enough space for the airflow to flow. Since the cell pressure relief channel 30 is formed by the spacing between the bottom plate 31 and the insulation bracket 33 formed by the support member 32, in order to ensure smooth airflow within the cell pressure relief channel 30, a projection area of the support member 32 on the bottom plate 31 or on the insulation bracket 33 is far less than an area of the bottom plate 31 or an area of the insulation bracket 33 to ensure that the cell pressure relief channel 30 has the sufficiently large space for the airflow to flow. In addition, the support member 32 also serves as a support structure for supporting the insulation bracket 33 and the cell group 1 thereon. The support member 32 needs to satisfy certain support strength and can provide a uniform and constant support force for the insulation bracket 33 to avoid the insulation bracket 33 from being deformed due to an uneven force under the action of the support member 32 and the cell group 1. In the examples in FIGS. 3 and 4, the support member 32 is cylindrical, and a projection area of a single support member 32 on the insulation bracket 33 is less than the diameter of the cylindrical cell and is slightly greater than an interval between two adjacent cylindrical cells. The support member 32 may completely avoid the pressure relief inlet 331 of the insulation bracket 33 and may also shield a part of the pressure relief inlet 331, as long as the pressure relief inlet 331 is not completely shielded, to ensure that the ejecta generated through the explosion-proof valve of the cylindrical cell may smoothly enter the cell pressure relief channel 30 from the pressure relief inlet 331.

In an embodiment, the support member 32 is made of foam, and the foam may provide excellent functions such as heat insulation, cushioning, flame retardancy, support and vibration damping. In an embodiment, the support member 32 may be fixedly connected to the bottom plate 31 and the insulation bracket 33 through a double-sided adhesive tape.

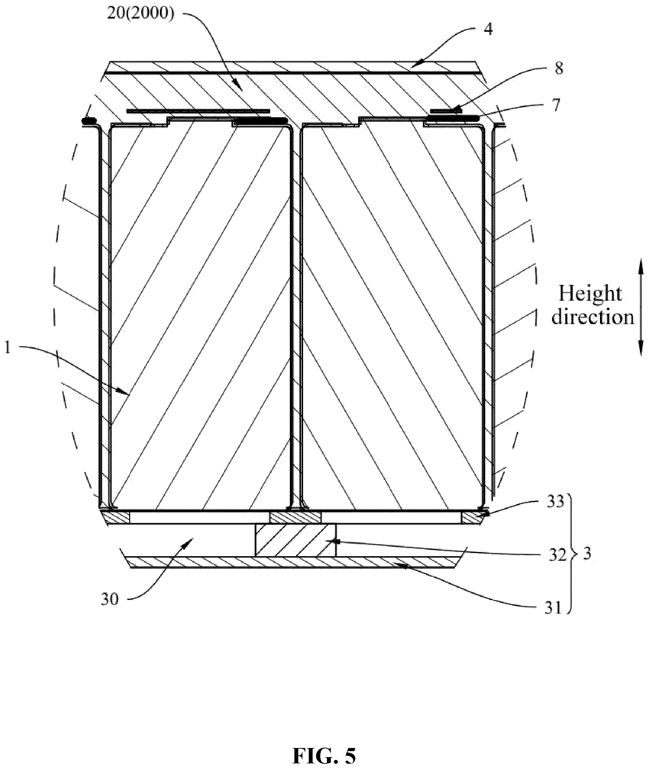

FIG. 5 shows a partial enlarged view of a battery module 200 of FIG. 3. As shown in FIG. 5, in conjunction with FIG. 4, the battery module 200 further includes a fire-resistant belt 5. The fire-resistant belt 5 is disposed between the insulation bracket 33 and the cell group 1 and is made of a high-temperature-resistant material, and has a function of thermal insulation and flame retardancy.

In an embodiment, the battery module 200 further includes a liquid cooling system 6. The liquid cooling system 6 includes multiple liquid cooling plates and pipelines communicating the multiple liquid cooling plates, and liquid cooling plates are disposed between every two adjacent rows of cylindrical cells to cool the cylindrical cells. Lengths of the multiple liquid cooling plates may be the same, or may be completely different, or may not all be the same. A length of each liquid cooling plate is determined according to the lengths of the two rows of cylindrical cells that cooperate therewith, which is not limited herein.

In an embodiment, the battery module 200 further includes a cells contact system (CCS) 7 and an insulation cover plate 8. The CCS 7 is welded on the poles of the cylindrical cells. The cylindrical cells may be connected in series or in parallel by means of the CCS 7. The insulation cover plate 8 is bonded to the CCS 7 by means of glue and is configured to insulate the cells and the box cover of the box body 100 and prevent valve lift-off during the thermal runaway of the battery cell. By way of example, the insulation cover plate 8 may be a glass fiber board.

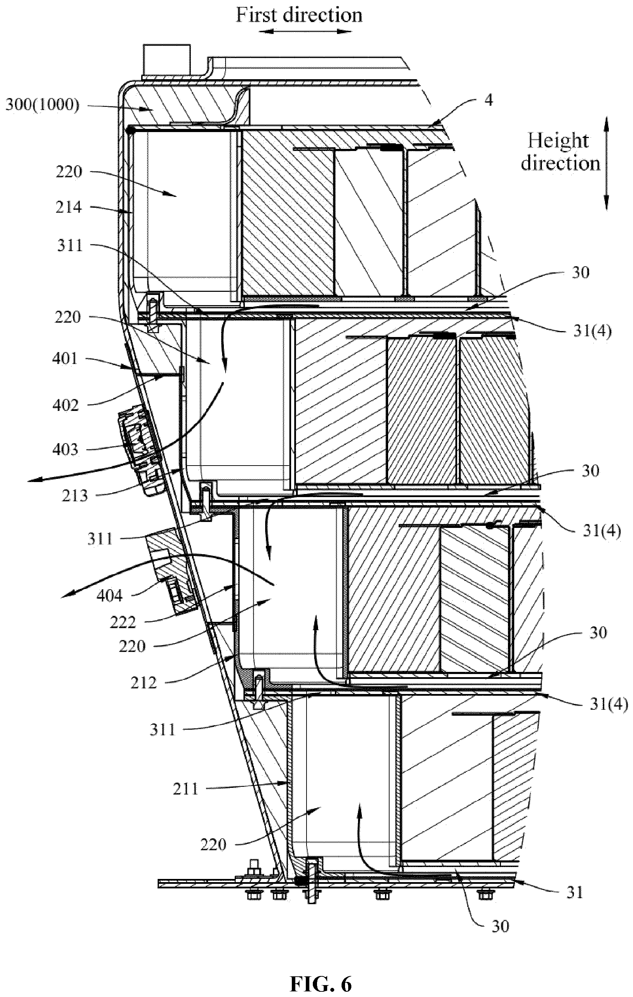

FIG. 6 is a partial enlarged view of a battery pack of FIG. 3. As shown in FIG. 6, in conjunction with FIG. 4, the battery pack further includes a pressure relief system 400, the frames 2 of all battery modules 200 are each provided with a sub-channel 220, the sub-channels 220 of all the frames 2 communicate with each other to form a module pressure relief channel 221, and the ejecta generated when the explosion-proof valve of the cell group 1 bursts may flow into the module pressure relief channel 221. An inlet of the pressure relief system 400 communicates with the module pressure relief channel 221, and part of the ejecta within the module pressure relief channel 221 may be discharged outside the box body 100 through the pressure relief system 400. The pressure relief solution of the battery pack can reduce or even eliminate the need for an exhaust pipe and a fixing structure of the exhaust pipe between the battery modules 200. The module pressure relief channel 221 is formed only by the sub-channels 220 on the frames 2 of the multiple battery modules 200 disposed in the stacked manner, when an air pressure in the module pressure relief channel 221 is higher than the preset air pressure, part of the ejecta within the module pressure relief channel 221 is discharged out of the box body 100 through the pressure relief system 400 so that it can not only improve the safety of the battery pack, but also achieve the lightweight design of the battery pack and increase the energy density of the battery pack.

In an embodiment, the cell pressure relief channel 30 has a pressure relief outlet 330. The cell pressure relief channel 30 within each battery module 200 is in direct communication with the sub-channel 220 of the frame 2 of the battery module 200 through the pressure relief outlet 330 so that the airflow within the cell pressure relief channel 30 can flow into the sub-channel 220. The insulation bracket 33 has a notch 332, and the bottom plate 31 has an aperture 311. The aperture 311 and the notch 332 jointly form this pressure relief outlet 330 to ensure that the sub-channels 220 between the multiple battery modules 200 communicate with each other.

In an embodiment, as shown in FIG. 6, in conjunction with FIG. 4, the insulation bracket 33 has a notch 332, and the bottom plate 31 has an aperture 311. The notch 332 of the insulation bracket 33 is disposed to surround the peripheral side of the sub-channel 220 so that the aperture 311 on the bottom plate 31 directly communicates with the sub-channel 220. The bottom plate 31 of the first battery module 201 is fixed on the closure plate 102, and the aperture 311 on the bottom plate 31 of the first battery module 201 is closed by the closure plate 102. The bottom plate 31 of the second battery module 202 is fixed on the frame 2 of the first battery module 201, and the aperture 311 on the bottom plate 31 of the second battery module 202 directly communicates with the sub-channel 220 of the first battery module 201. The bottom plate 31 of the third battery module 203 is fixed on the frame 2 of the second battery module 202, and the aperture 311 on the bottom plate 31 of the third battery module 203 directly communicates with the sub-channel 220 of the second battery module 202. The bottom plate 31 of the fourth battery module 204 is fixed on the frame 2 of the third battery module 203, and the aperture 311 on the bottom plate 31 of the fourth battery module 204 directly communicates with the sub-channel 220 of the third battery module 203, thereby achieving the communication between the sub-channels 220 of the four battery modules 200.

In another embodiment, the insulation bracket 33 has a notch 332, and the bottom plate 31 has an aperture 311. The notch 332 of the insulation bracket 33 is located below the sub-channel 220 so that the aperture 311 on the bottom plate 31 communicates with the sub-channel 220 through the notch 332, and the sub-channels 220 between the multiple battery modules 200 communicate with each other through the pressure relief outlet 330 formed by the aperture 311 and the notch 332.

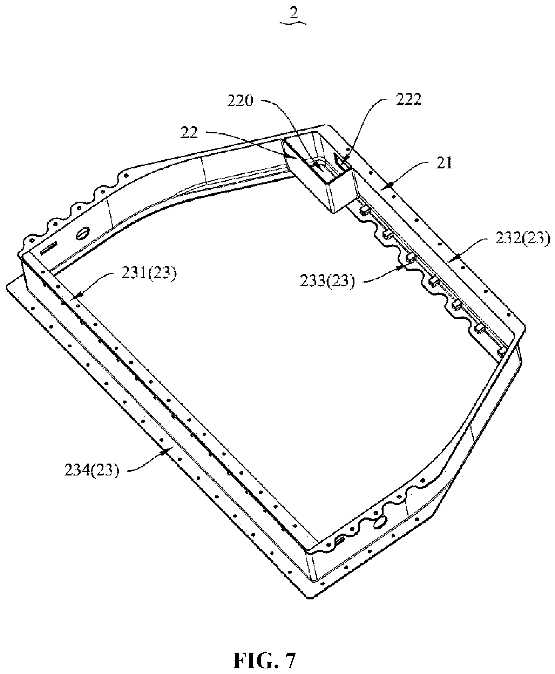

FIG. 7 shows a schematic structural diagram of a frame 2 of a battery module 200 provided in the present application. As shown in FIG. 7, in conjunction with FIG. 6, the frame 2 includes a frame body 21 and a channel member 22. The frame body 21 is an enclosed shell structure penetrating vertically in the height direction of the box body 100. The channel member 22 is fixed on an inner wall of the frame body 21. The channel member 22 cooperates with the inner wall of the frame body 21 to form the sub-channel 220, or the sub-channel 220 is provided within the channel member 22. The sub-channel 220 penetrates through the channel member 22 in the height direction of the box body 100. In an embodiment, the frame body 21 and the channel member 22 are an integrally formed structure, not only the overall structural strength of the frame 2 can be improved, but also the assembly time of the frame 2 can be saved and thus the assembly efficiency of the battery module 200 can be improved.

Since all the sub-channels 220 communicate with each other, as long as a pressure relief port 222 communicating with the sub-channel 220 is disposed on an outer side wall of one frame 2, and then an inlet of the pressure relief system 400 communicates with the pressure relief port 222, the ejecta in the module pressure relief channel 221 can be discharged from the pressure relief system 400.

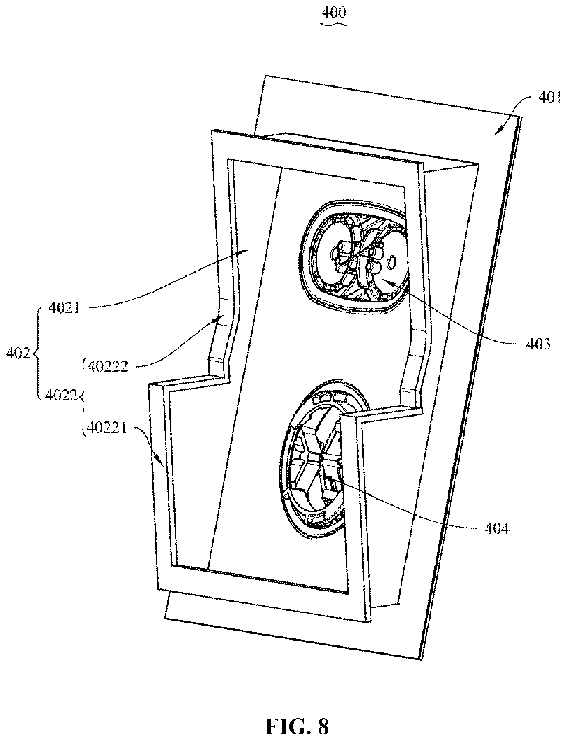

FIG. 8 shows a schematic structural diagram of a pressure relief system 400 provided in the present application. As shown in FIG. 8, in conjunction with FIG. 6, the pressure relief system 400 includes a mounting plate 401, a communication pipe 402 and a pressure relief valve 403. The mounting plate 401 is fixed on the box body 100. The pressure relief valve 403 is mounted on the mounting plate 401 and is located outside the box body 100. A first end of the communication pipe 402 is mounted on the mounting plate 401 and is disposed to surround a peripheral side of the inlet of the pressure relief valve 403. A second end of the communication pipe 402 is disposed to surround the peripheral side of the pressure relief port 222. The box body 100 has a hole position for mounting the mounting plate 401. The second end of the communication pipe 402 passes through this hole position and is in sealing cooperation with the side wall of the frame 2. The mounting plate 401 is located outside the hole position and is fixedly connected to the outer wall of the box body 100 in a sealed manner.

The pressure relief system 400 further includes a ventilation valve 404. The ventilation valve 404 is mounted on the mounting plate 401 and is located outside the box body 100. The ventilation valve 404 is configured to balance the air pressure between the inside and outside of the box body 100. The pressure relief valve 403 is configured to relieve the pressure when the air pressure inside the box body 100 exceeds a preset value, to avoid an excessive increase in the air pressure inside the box body 100. The ventilation valve 404 is configured to ventilate when the air pressure inside the box body 100 is lower than the preset value, to ensure the air pressure balance between the inside and outside of the box body 100.

In an embodiment, the frame 2 of the second battery module 202 and the frame 2 of the third battery module 203 each have a pressure relief port 222. The pressure relief system 400 communicates with the above-described two pressure relief ports 222. The pressure relief valve 403 and the ventilation valve 404 of the pressure relief system 400 are spaced apart in a stacking direction of the second battery module 202 and the third battery module 203.

In an embodiment, the communication pipe 402 includes a pipe portion 4021 and a sealing portion 4022. One end of the pipe portion 4021 is fixed on the mounting plate 401 and is disposed to surround the peripheral side of the pressure relief valve 403. The other end of the pipe portion 4021 is connected to the sealing portion 4022. The sealing portion 4022 is configured to be in sealing cooperation with the outer side wall of the frame 2 and enable the pressure relief port 222 on the frame 2 to be located inside the pipe portion 4021; thus, the ejecta in the module pressure relief channel 221 may enter the pipe portion 4021 from the pressure relief port 222. When the pressure of the ejecta is greater than the preset pressure, the ejecta may be discharged from the pressure relief valve 403.

When the second battery module 202 and the third battery module 203 are stacked in a staggered manner, an end surface of the sealing portion 4022 in sealing cooperation with the frame 2 of the battery module 200 has a first sealing surface 40221 and a second sealing surface 40222 that are disposed in a stepped manner. The first sealing surface 40221 is in sealing cooperation with the frame 2 of the second battery module 202, and the second sealing surface 40222 is in sealing cooperation with the frame 2 of the third battery module 203.

According to the battery module 200 provided in the present application, the frame 2 of the housing 9 of the battery module 200 can be improved to facilitate the fixed connection between the housings 9 that are stacked in a staggered manner and improve the stability of the housings 9 simultaneously.

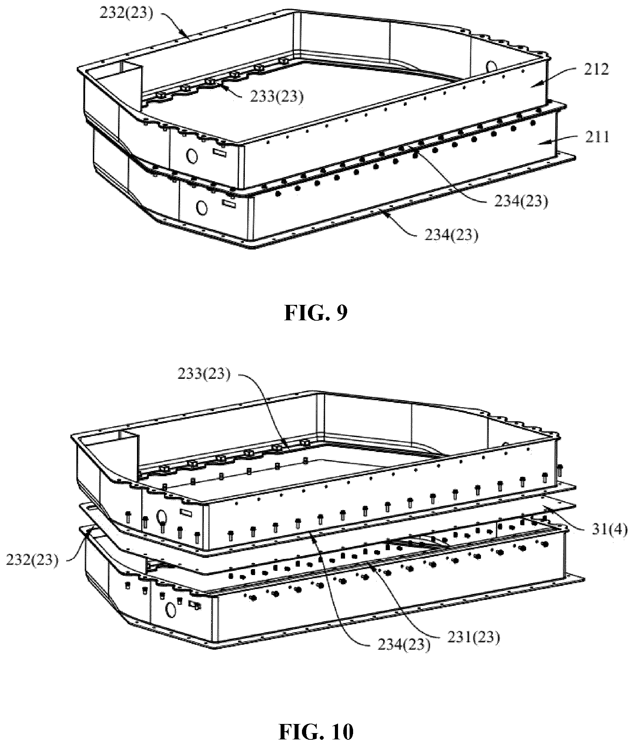

FIG. 9 shows a schematic structural diagram of two adjacent frames 2 in a connected state. FIG. 10 shows a schematic structural diagram of two adjacent frames in a disassembled state. As shown in FIGS. 9 and 10, in conjunction with FIG. 6, an end portion of any one frame 2 facing the other frame 2 is provided with transition portions 23 at two ends in the first direction. One of the two transition portions 23 is located inside the frame 2, and the other transition portion 23 is located outside the frame 2. For the two transition portions 23 of a frame 2, the transition portion 23 located inside the frame 2 is fixedly connected to a transition portion 23 of another frame 2 adjacent to the frame 2 which is located outside the other frame 2, and the transition portion 23 located outside the frame 2 is fixedly connected to a transition portion 23 of the other frame 2 adjacent to the frame 2 which is located inside the other frame 2; thus, facilitating the fixed connection between the frames 2.

In a frame 2 adjacent to the closure plate 102, an end portion of the frame 2 adjacent to the closure plate 102 is provided with a transition portion 23 at two ends in the first direction respectively. The two transition portions 23 are fixedly connected to the closure plate 102. With the arrangement, the fixed connection between the frame 2 adjacent to the closure plate 102 and the closure plate 102 is facilitated. In an embodiment, for these two transition portions 23, one transition portion 23 is located inside the frame 2, and the other transition portion 23 is located outside the frame 2; or both the transition portions 23 are located inside the frame 2; or both the two transition portions 23 are located outside the frame 2. With these three arrangements, the connection between the frame 2 and the closure plate 102 can be achieved.

In the frame 2 farthest from the closure plate 102, an end portion of the frame 2 away from the closure plate 102 is provided with a transition portion 23 at two ends in the first direction respectively. The two transition portions 23 are configured to be fixedly connected to the cover plate 4. In an embodiment, one of the two transition portions 23 is located inside the frame 2, and the other one of the two transition portions 23 is located outside the frame 2; or the two transition portions 23 are located inside the frame 2; or the two transition portions 23 are located outside the frame 2. With three arrangements, the connection between the frame 2 and the closure plate 102 can be achieved.

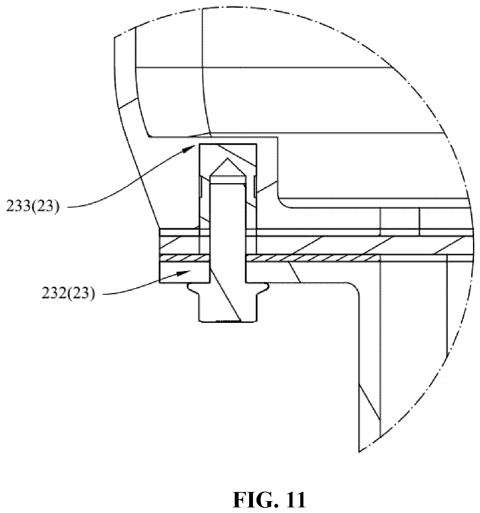

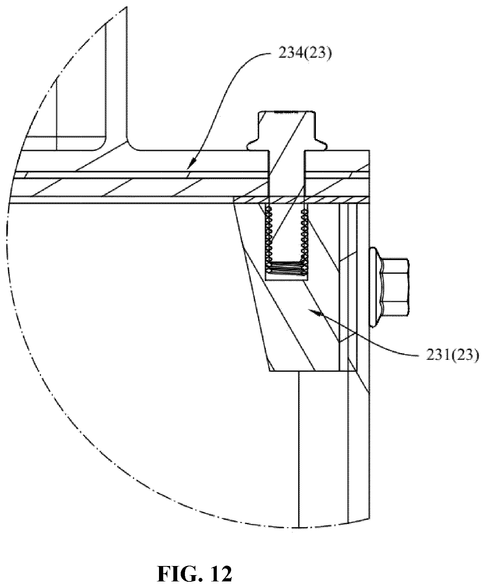

FIG. 11 shows a sectional view of two adjacent frames 2 of FIG. 6 at a transition portion 23 located at one end in a first direction. FIG. 12 shows a sectional view of two adjacent frames 2 of FIG. 6 at a transition portion 23 located at the other end in the first direction. As shown in FIGS. 11 and 12, in conjunction with FIGS. 6 and 3, for ease of description, the frame 2 of the first battery module 201 is denoted as a first frame 211, the frame 2 of the second battery module 202 is denoted as a second frame 212, the frame 2 of the third battery module 203 is denoted as a third frame 213, and the frame 2 of the fourth battery module 204 is denoted as a fourth frame 214. The first frame 211 is the frame 2 adjacent to the closure plate 102, and the fourth frame 214 is the frame 2 farthest from the closure plate 102. An upper transition portion 23 and a lower transition portion 23 located inside the frame 2 are denoted as an upper inner transition portion 231 and a lower inner transition portion 233, respectively, and an upper transition portion 23 and a lower transition portion 23 located outside the frame 2 are denoted as an upper outer transition portion 232 and a lower outer transition portion 234, respectively.

A lower end of each of the first frame 211, the second frame 212, the third frame 213 and the fourth frame 214 is provided with the lower inner transition portion 233 and the lower outer transition portion 234 at two ends in the first direction, respectively. An upper end of each of the first frame 211, the second frame 212, and the third frame 213 is provided with the upper outer transition portion 232 and the upper inner transition portion 231 at two ends in the first direction, respectively. An upper end of the fourth frame 214 is provided with the upper inner transition portions 231 at two ends in the first direction, respectively.

The connection relationship between the frames 2 is as follows. The lower inner transition portion 233 and the lower outer transition portion 234 at the lower end of the first frame 211 are fixedly connected to the corresponding bottom plate 31 and then fixedly connected to the closure plate 102. The lower inner transition portion 233 at the lower end of the second frame 212 is fixedly connected to the upper outer transition portion 232 at the upper end of the first frame 211, and the lower outer transition portion 234 of the second frame 212 is fixedly connected to the upper inner transition portion 231 at the upper end of the first frame 211. The lower inner transition portion 233 at the lower end of the third frame 213 is fixedly connected to the upper outer transition portion 232 at the upper end of the second frame 212, and the lower outer transition portion 234 of the third frame 213 is fixedly connected to the upper inner transition portion 231 at the upper end of the second frame 212. The lower inner transition portion 233 at the lower end of the fourth frame 214 is fixedly connected to the upper outer transition portion 232 at the upper end of the third frame 213, and the lower outer transition portion 234 of the fourth frame 214 is fixedly connected to the upper inner transition portion 231 at the upper end of the third frame 213. The two upper inner transition portions 231 at the upper end of the fourth frame 214 are both configured to be fixedly connected to the cover plate 4.

The upper inner transition portion 231 at the upper end of each of the first frame 211, the second frame 212, the third frame 213, and the fourth frame 214 is detachably and fixedly connected to the corresponding frame 2. The lower outer transition portion 234 and the lower inner transition portion 233 at the lower end of each of the first frame 211, the second frame 212, the third frame 213, and the fourth frame 214 are of an integral structure with the corresponding frame 2. The upper outer transition portion 232 at the upper end of each of the first frame 211, the second frame 212 and the third frame 213 is of an integral structure with the corresponding frame 2. Of course, in some other embodiments, whether the transition portion 23 is an integral structure with the frame 2 or is detachably and fixedly connected to the frame 2 may be designed as required. All transition portions 23 of a frame 2 may be integrally formed with the frame 2; or all transition portions 23 of a frame 2 may be detachably and fixedly connected to the frame 2; or part of the transition portions 23 of a frame 2 may be integrally formed with the frame 2, and the other part of the transition portions 23 may be detachably and fixedly connected to the frame 2, which is not limited herein.

When the transition portion 23 is detachably and fixedly connected to the frame 2, the side wall of the frame 2 has a through hole, and a side surface of the transition portion 23 has a first threaded hole. A bolt passes through the through hole of the side wall of the frame 2 and is threadedly connected to the first threaded hole of the transition portion 23 to achieve the fixed connection between the transition portion 23 and the frame 2. A top surface of the transition portion 23 has a second threaded hole. The bottom plate 31 or the cover plate 4 or the transition portions 23 of another frame 2 is threadedly connected to the second threaded hole through a bolt. The first threaded hole and the second threaded hole are arranged on the horizontal plane in a staggered manner.

The upper inner transition portion 231 at the upper end of each of the first frame 211, the second frame 212, the third frame 213 and the fourth frame 214 is plastic. To ensure the connection strength between the frame 2 and the upper inner transition portion 231 and between the bottom plate 31 (cover plate 4) and the upper inner transition portion 231, the first threaded hole and the second threaded hole on the upper inner transition portion 231 are formed by metal bushings mounted inside the upper inner transition portion 231. The upper inner transition portion 231 has a first through hole and a second through hole. The metal bushing is fixed in the first through hole to form the first threaded hole, and the metal bushing is fixed in the second through hole to form the second threaded hole.

## Claims

1. A battery pack, comprising:
a box body (100);
a plurality of battery modules (200) stacked within the box body (100) in a height direction of the box body (100), wherein a battery module (200) of the plurality of battery modules (200) comprises a frame (2) and a cell group (1) accommodated within the frame (2), the frame (2) is provided with a sub-channel (220), sub-channels (220) of frames (2) of the plurality of battery modules (200) communicate with one another to form a module pressure relief channel (221), and ejecta generated during explosion of an explosion-proof valve of the cell group (1) is capable of flowing into the module pressure relief channel (221); and
a pressure relief system (400) communicating the module pressure relief channel (221) with an exterior of the box body (100).

2. The battery pack of claim 1, wherein the frame (2) comprises a frame body (21) and a channel member (22), the channel member (22) is fixed on an inner wall of the frame body (21), the sub-channel (220) is formed by cooperation between the channel member (22) and the inner wall of the frame body (21), or the sub-channel (220) is disposed within the channel member (22), and the sub-channel (220) extends in the height direction of the box body (100).

3. The battery pack of claim 2, wherein the frame body (21) and the channel member (22) are of an integrated structure.

4. The battery pack of claim 1, wherein the battery module (200) further comprises a pressure relief support assembly (3), the pressure relief support assembly (3) is mounted at an end portion of the frame (2) and is configured to support the cell group (1), a cell pressure relief channel (30) is disposed within the pressure relief support assembly (3), the cell pressure relief channel (30) comprises a pressure relief inlet (331) corresponding to the explosion-proof valve of the cell group (1) and a pressure relief outlet (330) communicating with the module pressure relief channel (221);
wherein the pressure relief support assembly (3) further comprises a bottom plate (31) and an insulation bracket (33) that are disposed in sequence, the cell pressure relief channel (30) is formed between the bottom plate (31) and the insulation bracket (33), the bottom plate (31) is fixed to the end portion of the frame (2), the bottom plate (31) has an aperture (311), the insulation bracket (33) has a notch (332) corresponding to the aperture (311), the aperture (311) and the notch (332) form the pressure relief outlet (330), the insulation bracket (33) is configured to carry the cell group (1), and the pressure relief inlet (331) is disposed on the insulation bracket (33).

5. The battery pack of claim 4, wherein the battery module (200) further comprises a support member (32), the support member (32) is located between the bottom plate (31) and the insulation bracket (33), one end of the support member (32) is connected to and is supported on the bottom plate (31), and the other end of the support member (32) is connected to the insulation bracket (33) so that the cell pressure relief channel (30) is formed between the bottom plate (31) and the insulation bracket (33);
wherein the cell group (1) comprises a plurality of cylindrical cells arranged in a same plane, the insulation bracket (33) has a plurality of pressure relief inlets (331), and the plurality of pressure relief inlets (331) are disposed in one-to-one correspondence with explosion-proof valves of the plurality of cylindrical cells.

6. The battery pack of claim 4, wherein for two adjacent battery modules (200) among the plurality of battery modules (200), the sub-channel (220) of an upper battery module (200) communicates with the sub-channel (220) of a lower battery module (200) through the pressure relief outlet (330) corresponding to the upper battery module (200);
wherein the battery module (200) comprises a housing (9), the housing (9) comprises the frame (2), and the bottom plate (31) and a cover plate (4) that are connected to two opposite ends of the frame (2) respectively, and for two adjacent battery modules (200) among the plurality of battery modules (200), the bottom plate (31) of an upper battery module (200) and the cover plate (4) of a lower battery module (200) are of an integrated structure.

7. The battery pack of claim 6, further comprising at least one of:
a module protective member (300), wherein a first interval (1000) exists between the plurality of battery modules (200) and an inner wall of the box body (100), the module protective member (300) is at least partially accommodated in the first interval (1000), and the housing (9) is bonded to the box body (100) through the module protective member (300); and
a cell protective member (20), wherein a second interval (2000) exists between the cell group (1) and an inner wall of the housing (9), the cell protective member (20) is at least partially accommodated in the second interval (2000), and the cell group (1) is bonded to the housing (9) through the cell protective member (20);
wherein in a case where the battery pack at least comprises the module protective member (300), the module protective member (300) is formed by curing a flowable insulating material filled in the first interval (1000); and
in a case where the battery pack at least comprises the cell protective member (20), the cell protective member (20) is formed by curing a flowable insulating material filled in the second interval (2000).

8. The battery pack of any one of claims 1 to 7, wherein an outer side wall of at least one frame of the frames (2) is provided with a pressure relief port (222) communicating with the sub-channel (220), and an inlet of the pressure relief system (400) communicates with the pressure relief port (222).

9. The battery pack of claim 8, wherein the pressure relief system (400) comprises a mounting plate (401), a communication pipe (402) and a pressure relief valve (403), the mounting plate (401) is fixed on the box body (100), the pressure relief valve (403) is mounted on the mounting plate (401) and is located at the exterior of the box body (100), one end of the communication pipe (402) is mounted to the mounting plate (401) and is disposed to surround a peripheral side of an inlet of the pressure relief valve (403), and the other end of the communication pipe (402) is disposed to surround a peripheral side of the pressure relief port (222);
wherein the pressure relief system (400) further comprises a ventilation valve (404), and the ventilation valve (404) is mounted on the mounting plate (401) and is located at the exterior of the box body (100);
wherein the communication pipe (402) comprises a pipe portion (4021) and a sealing portion (4022), one end of the pipe portion (4021) is fixed on the mounting plate (401) and is disposed to surround a peripheral side of the pressure relief valve (403), the other end of the pipe portion (4021) is connected to the sealing portion (4022), and the sealing portion (4022) is in sealing fit with an outer side wall of the frame (2) to enable the pressure relief port (222) to be located within the pipe portion (4021).

10. The battery pack of any one of claims 1 to 9, wherein the box body (100) comprises a cover shell (101) and a closure plate (102), the closure plate (102) is fixed to an opening end of the cover shell (101) and cooperates with the cover shell (101) to form an accommodation space for accommodating the plurality of battery modules (200), a battery module (200) of the plurality of battery modules (200) facing the closure plate (102) is fixedly connected to the closure plate (102), and the closure plate (102) is configured to support the plurality of battery modules (200).

11. The battery pack of any one of claims 1 to 9, wherein the box body (100) comprises a cover shell (101) and a closure plate (102) fixed to an opening end of the cover shell (101), the cover shell (101) comprises a first surrounding wall surface (1012) inclined relative to the closure plate (102), the plurality of battery modules (200) stacked within the box body (100) in the height direction of the box body (100) are arranged in a staggered manner, and the plurality of battery modules (200) are sequentially mounted in an inclined direction of the first surrounding wall surface (1012).

12. The battery pack of claim 11, wherein an included angle between the first surrounding wall surface (1012) and the closure plate (102) ranges from 60° to 75°.

13. The battery pack of claim 12, wherein the cover shell (101) further comprises a second surrounding wall surface (1013), and the second surrounding wall surface (1013) is disposed opposite to and is at least partially parallel to the first surrounding wall surface (1012).

14. The battery pack of claim 12, wherein for any one of the frames (2), two transition portions (23) are respectively provided at two ends of an end portion of the frame (2) facing another frame (2) adjacent to the frame (2), one transition portion (23) of the two transition portions (23) is located inside the frame (2), the other transition portion (23) of the two transition portions (23) is located outside the frame (2), the one transition portion (23) of the frame (2) located inside the frame (2) is fixedly connected to a transition portion (23) of the other frame (2) located outside the other frame (2), and the other transition portion (23) of the frame (2) located outside the frame (2) is fixedly connected to a transition portion (23) of the other frame (2) located inside the other frame (2);
wherein the transition portions (23) of a frame (2) adjacent to the closure plate (102) are disposed at the end portion of the frame (2) facing the closure plate (102), and the transition portions (23) are fixedly connected to the closure plate (102).

15. A powered device, comprising a device main body and the battery pack of any one of claims 1 to 14, wherein the device main body has a mounting space for accommodating the battery pack.
